# EUROPÄISCHE PATENTSCHRIFT

(11) **EP 1 569 867 B1**
(45) Veröffentlichungstag und Bekanntmachung des Hinweises auf die Patenterteilung: **28.03.2007**
(21) Anmeldenummer: 03813538.0
(22) Anmeldetag: 11.12.2003
(51) Int. Cl.: H01L 21/768, C08F 293/00, B01D 71/80

(54) **VERFAHREN ZUR HERSTELLUNG VON METALLISIERTEN NANOPARTIKEL UND NANOSKOPISCHEN STRUKTUREN**
METHOD OF MANUFACTURING METALLISED NANOPARTICLES AND NANOSCOPIC STRUCTURES
MÉTHODE DE FABRICATION DE NANOPARTICULES ET STRUCTURES NANOSCOPIQUES MÉTALISÉES

(30) Priorität: 20.12.2002 DE 10261885
(43) Veröffentlichungstag der Anmeldung: 07.09.2005
(73) Patentinhaber: Leibniz-Institut für Polymerforschung Dresden e.V., 01069 Dresden (DE)
(72) Erfinder: FAHMI ABDEL-NOUR, Amir Wagih, Nottingham, Nottinghamshire NG7 2RD (GB); STAMM, Manfred, 01705 Freital-Pesterwitz (DE)
(74) Vertreter: Heyner, Klaus
(86) Internationale Anmeldenummer: PCT/DE2003/004227
(87) Internationale Veröffentlichungsnummer: WO 2004/056699

(56) Entgegenhaltungen:
- EP-A- 1 028 143
- WO-A-00/02090
- WO-A-99/12994
- WO-A-02/073699
- FOERSTER S ET AL: "AMPHIPHILIC BLOCK COPOLYMERS IN STRUCTURE-CONTROLLED NANOMATERIAL HYBRIDS" ADVANCED MATERIALS, VCH VERLAGSGESELLSCHAFT, WEINHEIM, DE, Bd. 10, Nr. 3, 11. Februar 1998 (1998-02-11), Seiten 195-217, XP000732695 ISSN: 0935-9648
- MANSKY P CHAIKIN P: "Monolayer films of diblock copolymer microdomains for nanolithographic applications" JOURNAL OF MATERIALS SCIENCE, CHAPMAN AND HALL LTD. LONDON, GB, Bd. 30, 1995, Seiten 1987-1992, XP002953658 ISSN: 0022-2461

## Beschreibung

Die Erfindung betrifft Nanopartikel und nanoskopische Strukturen und Verfahren zu deren Herstellung.

Nanopartikel und nanostrukturierte Materialien werden für vielfältige Anwendungen im Bereich der Elektronik, der Mikrotechnik, der Biotechnologie, der Katalyse, der Photonik und Medizintechnik sowie in der Bautechnik eingesetzt. Derartige Materialien finden insbesondere Anwendung für elektronische, magnetische, optische, optoelektronische und mikromechanische Geräte und Sensoren.

Die Erzeugung von Nanopartikeln und nanostrukturierten Materialien ist Gegenstand der Nanotechnik oder Nanostrukturtechnik, einem modernen Gebiet der physikalischen Grundlagenforschung und Halbleitertechnik, das die Manipulation von Materie im atomaren Maßstab erlaubt. Ziel der Nanotechnik sind präzise Strukturierungen in der Größenordnung von Nanometern zur Herstellung extrem kleiner Bauelemente oder Strukturen mit vorgegebenen Eigenschaften.

Durch die Nanotechnik ergeben sich für Polymermaterialien neue Einsatzgebiete und Möglichkeiten. Aus Polymermaterialien lassen sich Nanopartikel und nanoskopische Strukturen bilden. Eines der Hauptgebiete der Nanotechnologie beschäftigt sich mit der Herstellung von Verbundwerkstoffen.

Durch die Größe der Nanopartikel und die Eigenschaften der Polymere ergeben sich sehr interessante Eigenschaften der gebildeten Nanokompositwerkstoffe.

Nanokomposite sind Verbundstoffe, die aus einem Matrixmaterial mit eingebetteten, oft faserförmigen Nanoteilchen bestehen, die gegenüber dem Matrixmaterial abweichende Eigenschaften haben.

Nanostrukturen sind regelmäßige Anordnungen von Nanoteilchen, die zumeist in der Halbleitertechnologie mittels lithographischer Verfahren mit Licht-, Röntgen- oder Elektronenstrahlen, zunehmend jedoch durch selbstorganisiertes Wachstum auf geeigneten Substraten, hergestellt werden.

Hinzu tritt die Möglichkeit der gezielten Modifikation der Eigenschaften durch eine Funktionalisierung der Oberfläche der Nanopartikel bzw. Nanostrukturen, beispielsweise durch eine Beschichtung oder chemische Modifizierung.

Als Nanopartikel bezeichnet man Partikel mit einer Größe von ca. 0,1 bis 200 Nanometern (nm).
Zylindrische Nanopartikel und Nanodrähte bzw. -fäden sowie Strukturen mit Nanolöchern und Verfahren zu deren Herstellung sind im Stand der Technik bekannt.

Es wurden bereits vielfältige Möglichkeiten zur Erzeugung von Nanopartikeln und nanoskopischen Strukturen beschrieben. Beispielsweise ist die Erzeugung verschiedener Morphologien durch die Mikrophasenseparation von Copolymeren eine im Stand der Technik beschriebene Technologie.

Weiterhin ist bekannt, dass durch die Zumischung und Herauslösung von niedermolekularen Komponenten zu Copolymeren nanoskopische Strukturen und Nanopartikel erzeugt werden können. Auf diese Weise können beispielsweise zylindrische Löcher in einer Struktur durch das Herauslösen einer niedermolekularen Komponente erzeugt werden. Ebenso ist es möglich, kurze Nanozylinder durch Herauslösen einer niedermolekularen Komponente zu erzeugen.

Die Orientierung von Copolymeren im Scherfeld ist gleichfalls ein im Stand der Technik beschriebener Effekt, welcher bereits technisch genutzt wird.

Aus der WO 99/12994 ist ein Verfahren zur Herstellung strukturierter organisch-anorganischer Hybridmaterialien im Nanometerbereich bekannt, bei dem ein amphiphiles Blockcopolymer als Templat eingesetzt wird.

Die WO 00/02090 offenbart periodisch geordnete nanostrukturierte Materialien und Verfahren zur Nutzung und Veränderung dieser Materialien. Dabei werden u. a. periodisch strukturierte mikrophasenseparierte polymere Bestandteile bereitgestellt, die periodisch auftretende separate Bereiche enthalten. Die polymeren Substanzen, die ein oder mehrere Bereiche umfassen, enthalten beispielsweise eine anorganische Substanz, die in der Lage ist, eine anorganische Oxidkeramik zu bilden. Des Weiteren wird ein Verfahren für die Veränderung der polymeren Bestandteile durch Oxidation und/oder Bestrahlung vorgestellt, um periodisch strukturierte poröse und löchrige Materialien zu bilden, welche z. B. ein keramisches Oxid in ihrer Struktur enthalten.

Die Herstellung von Nanofäden, dies sind zylinderförmige Partikel mit Durchmessern im Bereich der Nanopartikel, wobei die Länge der Nanofäden über den Nanopartikelbereich hinausgehen kann, erfolgt bislang über eine Lösungs-Synthese oder den schrittweisen Aufbau der Partikel von den Enden her (step-edge decoration).

Enthalten die Nanofäden oder auch Nanoröhren bzw. Nanotubes metallische Bestandteile und sind diese über einen bestimmten Bereich elektrisch leitfähig, so werden diese Partikel auch als Nanodrähte bezeichnet und sind von außerordentlichem Interesse für eine Vielzahl von Anwendungen.

Es ist Aufgabe der Erfindung, Nanopartikel und nanoskopische Strukturen, die für die nachfolgende Metallisierung der Oberflächen geeignet sind, und ein Verfahren zu deren Herstellung zur Verfügung zu stellen.

Dabei ist es von Interesse, die Eigenschaften der Nanopartikel an verschiedene Anwendungsgebiete anzupassen.

Erfindungsgemäß wird die Aufgabe durch ein Herstellungsverfahren nach Anspruch 1 gelöst, so dass durch diese Behandlung nanoskopische Strukturen, insbesondere nanoskopische Löcher oder Nanopartikel in der Größe von einem bis zweihundert Nanometer, entstehen.

Die Nanopartikel und nanoskopischen Strukturen können insbesondere dadurch modifiziert werden, dass der Mischung weitere Polymere zugegeben werden, die sich vorzugsweise in einer der Komponenten Lösen. Dies sind im beschriebenen Anwendungsfall Polystyren, Polyvinylpyridin oder Poly-para-methylstyren.

Besonders vorteilhaft ist, wenn als Blockcopolymer Polystyrenblockpoly(4-vinylpyridin) [PS-b-P4VP] eingesetzt wird.

Als niedermolekulare Komponente wird bevorzugt 3-n-Pentadecylphenol [PDP] verwendet.

Die erfindungsgemäß erhaltenen Nanopartikel weisen zylindrische Formen, Scheibenblattformen oder ellipsoide Formen auf oder sind auch als unregelmäßig geformte Partikel erhältlich.

Als nanoskopischenStrukturen werden bevorzugt nanoskopische Löcher in einer Struktur erhalten, die ebenfalls zylindrische, lamellenartige oder ellipsoide Formen aufweisen können.

Besondere vorteilhaft ist zur Erzeugung interessanter Eigenschaften die Funktionalisierung der Oberfläche der Nanopartikel und nanoskopischen Strukturen durch die Beschichtung oder chemischen Modifizierung der Oberfläche oder Verfüllung der Strukturen.

Die Funktionalisierung der Oberfläche besteht in einer Metallisierung derselben. Eine Metallisierung kann durch eine Adsorption von Metallionen aus einer Salzlösung mit einer anschließenden chemischen Reduktion zu einer reinen Metallschicht erfolgen. Anschließend wird die metallische Oberfläche durch Bedampfen, Sputtern oder elektrochemische oder chemische Abscheidung noch verbessert.

In besonders vorteilhafter Weise würde dadurch erreicht, dass die Nanopartikel und nanoskopischen Strukturen eine elektrisch leitfähige Schicht erhalten oder sich zumindest isolierte metallische Nanopartikel auf der Oberfläche anordnen.

Nach einer bevorzugten Ausgestaltung der Erfindung wird die Metallisierung der Oberfläche der Nanopartikel und nanoskopischen Strukturen mit Palladium, Nickel, Kobalt, Kadmiumselenid, Silber oder Gold vorgenommen. Weitere Metalle, Halbmetalle oder Verbindungen bzw. Mischungen derselben sind möglich.

Weitere Einzelheiten, Merkmale und Vorteile der Erfindung ergeben sich aus der nachfolgenden Beschreibung von Ausführungsbeispielen mit Bezugnahme auf die zugehörigen Zeichnungen. Es zeigen:
- Fig. 1(a), (b), (c), (d):: Schematischer Verfahrensablauf für die Erzeugung von Nanofäden und Struktur des Polymerkomplexes
- Fig. 2:: Aufbau eines Nanodrahtes
- Fig. 3:: Vorrichtung zur Extrusion von Polymerschmelzen

Es wurde gefunden, dass Nanofäden besonders vorteilhaft durch eine Selbstorganisation von nanostrukturierenden Materialien erzeugbar sind.
Erfindungsgemäß wird die Struktur von Blockcopolymeren gezielt verändert und anschließend genutzt, um Nanostrukturen zu erzeugen.

Als Copolymere werden Kunststoffe bezeichnet, bei denen am Aufbau der Polymerkette mindestens zwei verschiedene Struktureinheiten (Monomere) beteiligt sind. Nach Anordnung der Monomere A und B unterscheidet man alternierende Copolymere (regelmäßiger Wechsel, ABAB) und statistische Copolymere (unregelmäßige Verteilung, z.B. AABABBB).

Im Unterschied dazu sind Blockcopolymere mit jeweils langen Sequenzen der Struktureinheiten A und B oder auch weiterer Komponenten C, D usw. aufgebaut. Generell sind unterschiedliche Architekturen möglich. Genannt seien lineare Ketten, Pfropfpolymere, sternförmige Anordnungen und Ähnliche Strukturen.
Die verschiedenen Komponenten sind kovalent miteinander verbunden und normalerweise unmischbar miteinander. Es können eine oder mehrere Komponenten, niedermolekulare oder polymere, dazu gemischt werden, welche sich jeweils mit den Komponenten A, B mischen bzw. in Wechselwirkung treten.
Sie bilden aufgrund dieser Eigenschaften Gebiete mit einer Mikrostruktur im Nanobereich aus. Diese Gebiete sind geeignet, als Templat bzw. Schablone für Nanostrukturen zu dienen.

Nach der Konzeption der Erfindung wird die Schaffung eines funktionalen Polymerkomplexes erreicht, der auf der Selbstorganisation von Blockcopolymeren und der zugemischten Komponenten zu supramolekularen Strukturen basiert. Die physikalischen Bindungen innerhalb der supramolekularen Strukturen erlauben eine kontrollierte Selektivität der wesentlichen Bestandteile des Copolymers.

Nach der Selbstorganisation des Blockcopolymers zu den supramolekularen Strukturen und der Bildung der Mikrostrukturen führt erfindungsgemäß beispielsweise eine oszillierende Scherkraftbeanspruchung zu einer Verbesserung der Ausrichtung bzw. Orientierung der Mikrostrukturen. Eine Orientierung oder Ausrichtung kann auch durch selektive Wechselwirkung einer oder mehrer Komponenten mit einer festen, flüssigen oder gasförmigen Oberfläche stattfinden.

Wasserstoffbrückenbindungen spielen vorzugsweise eine fundamentale Rolle bei der Formation der supramolekularen Polymerstrukturen beim Selbstorganisationsprozess wegen der relativ geringen Bindungsenergie, welche eine hohe Flexibilität der Verbindungs- und Lösungsprozesse bei der Strukturierung ermöglicht.

Außerdem führt die Nutzung von ampholytischen Wasserstoffbrückenbindungen anstelle von Bindungen konventioneller Blockcopolymere untereinander zur Erlangung einer definierten Volumenfraktion mit der gewünschten Morphologie. Danach wird mit Lösungsmitteln die ampholytische und gegebenenfalls andere Komponenten durch das Abreißen der Wasserstoffbrückenbindungen selektiv extrahiert bzw. entfernt.

Nachdem die ampholytischen Komponenten aus dem Blockcopolymer chemisch entfernt wurden, sind diese frei werdenden Stellen bzw. Gebiete für Substrate nutzbar. Nach der Verdampfung des Lösungsmittels können diese Gebiete als Template für den Aufbau bzw. die Ansiedlung von Nanopartikeln dienen.

Der Aufbau von anorganischem Material an organischen Copolymeren ist hochselektiv und von großer Dichte und kann aus der Lösung auf nichtelektrochemischem Wege über einen weiten Bereich von Verfahrensbedingungen an Blockcopolymeren durch selektive Aggregation von Metallen erfolgen.

Das Verhältnis der Konzentration zwischen den Metallionen und den Nanofäden spielt eine fundamentale Rolle im Zusammenhang mit der großen Oberflächenenergie des Metalls, welche die der Blockcopolymere um Größenordnungen übersteigt.

Konsequenterweise überlagern somit Metall-Metall-Bindungen die Metall-Polymerbindungen, aber bei einer sehr kleinen Metallkonzentration wird es möglich, Metall-Polymerbindungen bis zu einer bestimmten Konzentration an der Polymeroberfläche auszubilden. Es bilden sich teils zuerst isolierte metallische Nanopartikel. Dann beginnen sich die Nanopartikel zu Clustern zu verbinden und schließlich einen Nanodraht zu bilden, gegebenenfalls bei mehrfacher Wiederholung des erfindungsgemäßen Verfahrens.

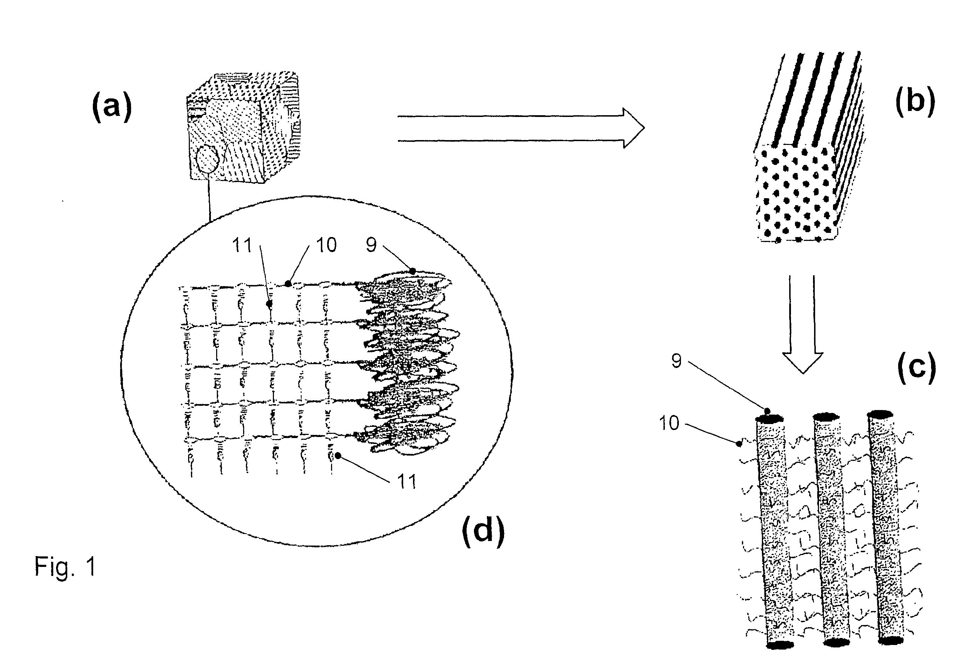

Das erste Teil des erfindungsgemäßen Verfahrens wird in Fig. 1 schematisch dargestellt.
Nach dieser ersten vorteilhaften Ausgestaltung der Erfindung werden die Nanofäden aus einem Diblockcopolymer gewonnen. Als Diblockcopolymer wird bevorzugt Polystyrenpoly(4-vinylpyridin) [PS-b-P4VP] eingesetzt. Der Komplex ist schematisch in Fig. 1 (a) zu sehen.

Die einzelnen Komponenten sind in Fig. 1 (d) in der Vergrößerung schematisiert verdeutlicht.
Das eingesetzte Copolymer hat einen Polydispersionsindex M_{W}/Mₘ = 1,07 und eine molare Masse von M_{W} = 21400 g/mol für Polystyren (PS) 9 und M_{W} = 20700 g/mol für Polyvinylpyridin (P4VP) 10.

Als niedermolekulare Komponente wird nach diesem Ausführungsbeispiel ampholitisches 3-n-Pentadecylphenol (PDP) 11 eingesetzt, um mit dem Diblockcopolymer einen supramolekularen Polymerkomplex PS-b-P4VP(PDP) gemäß Fig. 1 (a) zu bilden.

Dazu werden beide Komponenten in Chloroform bei 60°C über 24 Stunden gelöst und das Lösungsmittel dann abgezogen.

Der Polymerkomplex wird anschließend auf 125°C erwärmt und unter Vakuum in einer Form mit einem Durchmesser von 7,9 mm und einer Stärke von einem Millimeter zwischen Teflon-Platten für eine Stunde gehalten. Anschließend wird die Temperatur schrittweise auf 115°C erniedrigt, bevor das Material in eine Tablettenform mit 5 kN gepresst und anschließend auf 30°C abgekühlt wird. Die Probe weist vorzugsweise eine leichte Orientierung auf.

Es schließt sich eine oszillierende Scherbehandlung an, das Ergebnis ist in Fig. 1 (b) dargestellt. Der verwandte Umformer arbeitet im Bereich von 0,2 bis 200 g*cm. Die Dehnungsamplitude beträgt 50%, die Frequenz 0,5 Hz, und die Temperatur bei der Scherbehandlung wird über 12 Stunden konstant bei 115°C gehalten.

Der nunmehr durch die Scherbeanspruchung verbessert orientierte Polymerkomplex wird mit Methanol drei Tage lang dialysiert, wobei mit einem Überschuss an Methanol gearbeitet wird. Im Ergebnis wird die Matrix entfernt und Polymerfäden gemäß Fig. 1 (c) erhalten.

Nach der Scherung entstehen hexagonal gepackte Polystyrenzylinder in einer Matrix von PS-b-P4VP(PDP). Die Volumenfraktion von Polystyren liegt in dem Bereich von f = 0,2 bis 0,3. Die Polystyren-Nanofäden haben einen Durchmesser von ca. 25 nm und sind parallel zueinander orientiert in einer P4VP(PDP) - Matrix. Der Nanofaden aus PS-b-P4VP nach dem Entfernen der Matrix hat einen Durchmesser von ca. 35 nm. Mit metallischer Schicht aus Palladium beispielsweise weist der Nanodraht einen Durchmesser von ca. 60 nm auf.

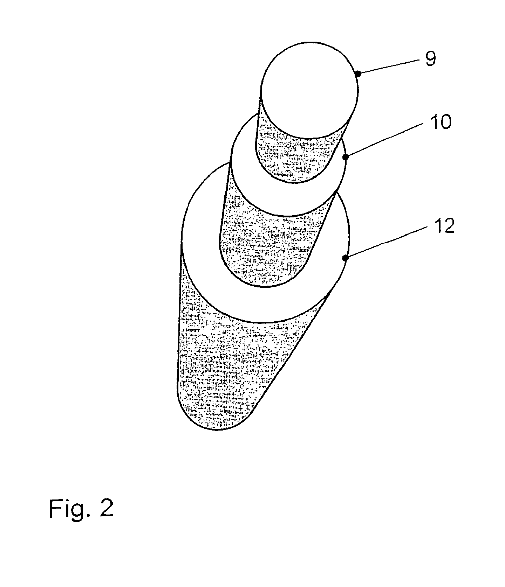

In Fig. 2 ist ein Nanodraht schematisch dargestellt. Der Polystyrenfaden 9 wird umgeben von einer Matrix Polyvinylpyridin 10, auf welcher Erfindungsgemäss die Metallschicht 12 angeordnet ist. Polystyren 2 und Polyvinylpyridin 10 sind kovalent miteinander verbunden.

Auf der Oberfläche der Nanofäden werden Erfindungsgemäss nun beispielsweise Metalle, wie Palladium, Nickel, Kobalt, Gold oder Silber, mit einer Redoxreaktion aus einer wässrigen Lösung bei Raumtemperatur abgeschieden. Alternativ oder kumulativ dazu werden metallische Nanopartikel, wie beispielsweise Cadmiumselenid (CdSe), aus der Lösung / Suspension auf der Oberfläche der Nanofäden positioniert.
Bei der Redoxreaktion dienen die Nanofäden des PS-b-P4VP Blockcopolymers als negatives Templat. Dies wird möglich durch ein freies Elektronenpaar im Stickstoff des Pyridinringes von P4VP.

Weiterhin zieht das Stickstoffatom des Pyridinrings des Poly(4-vinylpyridin) (P4VP) Metallionen, wie Palladium, Nickel und andere, an und führt zur Bildung einer stabilen Struktur mit dem Pyridinring. Der Stickstoff-Metall-Komplex in metallischen Nanodrähten dient als Keim zur Bildung stabiler Nanocluster bzw. Nanoschichten rund um die Nanofäden.
Die Schwierigkeit bei der Metallisierung der organischen Nanofäden liegt in der Erzeugung von organisch-anorganischen Bindungen auf der Oberfläche der Nanofäden.

Die Komplexierung des Metalls mit dem Pyridinring dient als organischanorganische Bindung.

Der Durchmesser der metallischen Nanopartikel bzw. Nanodrähte hängt nicht nur von der Größe der Template ab, sondern kann über die Reaktionsbedingungen, wie die Konzentration der Beschichtungslösung und die Reaktionszeit, beeinflusst werden.

Der Palladium-Nanodraht mit Polystyrenkern hat einen Durchmesser von 60 nm und eine Länge von mehreren µm und wurde erfolgreich durch die Reduktion von Palladiumazetat Pd(CH₃COO)₂ aus wässriger Lösung mit Dimethylaminboran (CH₃)₂NBH₂ synthetisiert.

Als bevorzugte Ausgestaltungen der Erfindung werden folgende Metallsalze für die Abscheidung von Metallen an Nanofäden eingesetzt:
Palladiumazetat Pd(CH₃COO)₂ mit Dimethylaminboran (CH₃)₂NBH₂ als Reduktionsmittel;
Nickelchlorid-6*H₂O NiCl₂ 6.H₂O mit Hydrazinhydrat H₂N-NH₂ * H₂O oder Natriumtetrahydroboran NaBH₄\Isopropanol als Reduktionsmittel,
Silbernitrat AgNO₃ mit Hydrazinhydrat H₂N-NH₂ * H₂O oder NaBH₄\Isopropanol als Reduktionsmittel,
Tetrachlorogoldsäure HAuCl₄ mit Hydrazinhydrat H₂N-NH₂ * H₂O oder NaBH₄\Isopropanol als Reduktionsmittel.

Im Unterschied dazu weisen Halbleiter-Nanodrähte mit einer Metallisierung durch Cadmiumselenidnanopartikel (CdSe) einen Durchmesser von ca. 80 nm auf.

Die Metallisierung der Nanofäden mit Cadmiumselenid (CdSe) erfolgt über dazu synthetisierte Nanopartikel der metallischen Verbindung.
Wenn Cadmiumazetatdihydrat-Pulver in Ethanol suspendiert wird, entsteht ein 0,1 M Cadmiumprecursor.

Eine 0,506 M ethanolische Lösung von Natriumhydrogenselenid (NaHSe) wird aus der Reaktion von Selen und Natriumborhydrid (NaBH) in Ethanol gewonnen. Für die Vorbereitung der Cadmiumselenid Nanopartikel werden 10 ml des 1 mmol Cadmiumprecursors unter vermindertem Druck verdampft. Der Rückstand wird in 100 ml N,N-Dimethylformamid (DMF) und 2,5 mmol 4-Mercaptobenzoesäure aufgelöst.

Die farblose Lösung reagiert mit 1,0 ml der ethanolischen Lösung von Natriumhydrogenselenid (NaHSe) unter einer Stickstoffatmosphäre. Dabei entsteht nach 30 min Rühren eine gelbe Suspension von Cadmiumselenid (CdSe). Ein ml dieser Lösung von Cadmiumselenid wird anschließend mit fünf ml Ethanol vermischt.

Die Nanofäden werden zur Beschichtung anschließend mit der Cadmiumselenid-Lösung 5 min in Kontakt gebracht und abschließend zweimal mit Ethanol gewaschen.

Der Vorteil der erfindungsgemäßen Ausführungsform liegt in der Erzeugung von metallischen Nanopartikeln oder Nanodrähten mit gleichmäßigen Metall-Nano-Schichten auf einem Nanotemplat durch eine einfache nichtelektrolytische Methode und/oder durch Abscheidung aus der Lösung /Suspension von metallischen / halbmetallischen Nanopartikeln am Polymerkern.

Das Nanotemplat entsteht dabei durch Selbstorganisation des Diblockcopolymeres PS-b-P4VP(PDP) über Wasserstoffbrückenbindungen mit ampholytischen PDP, wonach zur Ausrichtung der Polystyrenzylinder in P4VP(PDP) oszillierende Scherbeanspruchung mit großen Amplituden angewandt wird.

Nach der Entfernung des ampholitischen 3-n-Pentadecylphenol (PDP) wird ein Nanofaden erhalten, der aus einem Polystyren-Kern und einer dünnen Schicht Poly(4-vinylpyridin) (P4VP) besteht.

Nach einer weiteren vorteilhaften Ausgestaltung der Erfindung lässt sich zur Nachbehandlung und makroskopischen Ausrichtung der Struktur der Diblockcopolymere alternativ zur oszillierenden Scherbeanspruchung das Schmelzspinnen bzw. die Schmelzextrusion einsetzen.

Der Polymerkomplex PS-b-P4VP(PDP) wird vor der Extrusion bei 60°C im Vakuum 24 Stunden getrocknet und anschließend auf eine Temperatur von 120°C erwärmt. Danach liegt das Material als Schmelze vor.

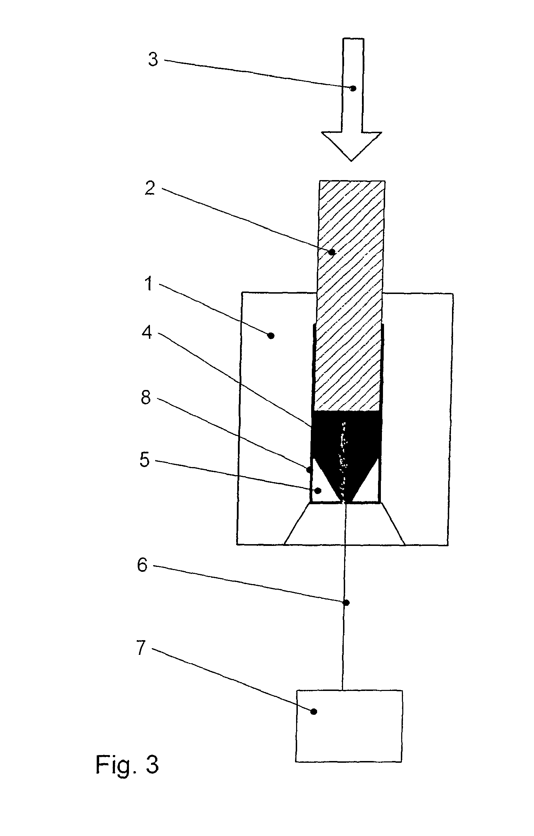

Die Vorrichtung zur Extrusion ist in Fig. 3 dargestellt.
Sie besteht im Wesentlichen aus einer Heizeinrichtung 1, welche einen Druckzylinder 8 umgibt der temperiert ist und einer Düse 5, welche den sich verjüngenden unteren Abschnitt des Druckzylinders 8 bildet. Die Düse 5 ist an ihrem Ausgang als Kapillare mit einem Durchmesser von 0,3 mm und einer Länge von 0,6 mm ausgebildet.

Die Polymerschmelze 4 wird zur Schmelzextrusion in den Druckzylinder 8 eingebracht. Eine Schubkraft 3 wirkt auf den Kolben 2. Durch den im inneren des Druckzylinders entstehenden Druck wird die temperierte Polymerschmelze 4 durch die Düse 5 zu einem Filament 6 gepresst, wodurch sich die Polymerstruktur teils makroskopisch ausrichtet. Das entstehende Filament 6 wird von einer 0,2 m von der Düse 5 entfernt angeordneten Wickelmaschine 7 mit einer Geschwindigkeit von 4 m/min aufgenommen. Der Volumendurchsatz der Polymerschmelze 4 bei der Schmelzextrusion beträgt ca. 0,156 cm³/min.

Durch die Schmelzextrusion kann ein sehr langes orientiertes Filament erzeugt werden, das die Nanostrukturierten Blockcopolymere enthält. Dieser Prozess kann in modifizierter Form auch kontinuierlich durchgeführt werden.

### LISTE DER BEZUGSZEICHEN

- 1: Heizeinrichtung
- 2: Kolben
- 3: Schubkraft
- 4: Polymerschmelze
- 5: Düse
- 6: Filament
- 7: Wickelmaschine
- 8: Druckzylinder
- 9: Polystyren
- 10: Poly(4vinylpyridin) (P4VP)
- 11: 3-n-Pentadecylphenol (PDP)
- 12: Metallschicht

## Patentansprüche

1. Verfahren zur Herstellung von Nanopartikeln und nanoskopischen Strukturen, umfassend die Schritte
a) Mischung eines Blockcopolymers mit mindestens einer niedermolekularen Komponente und
b) einer Phasenseparation der Mischung zur Erzeugung einer Nanostruktur,
c) einer Nachbehandlung zur Verbesserung der makroskopischen Orientierung der entstandenen Nanostruktur,
d) der Herauslösung mindestens der niedermolekularen Komponente, so dass nanoskopische Löcher oder Nanopartikel in der Größe von einem bis zweihundert nm entstehen,
**dadurch gekennzeichnet, dass**
eine Funktionalisierung der Oberfläche durch eine Metallisierung erfolgt, wobei
- Metallcluster, metallische Nanopartikel oder eine durchgehende Metallschicht (12) auf der Oberfläche angeordnet sind und
- die Metallisierung der Oberfläche durch eine Adsorption von Metallionen aus einer Salzlösung, in Verbindung mit der anschließenden chemischen Reduktion, zu einer reinen Metallschicht (12), Metallclustern oder Metallnanopartikeln vorgenommen wird.

2. Verfahren zur Herstellung von Nanopartikeln und nanoskopischen Strukturen nach Anspruch 1, **dadurch gekennzeichnet, dass** der Mischung nach Verfahrensschritt a) weitere Polymere, wie Polystyren (9), Polyvinylpyridin (10) oder Poly-para-methylstyren, zugegeben werden.

3. Verfahren zur Herstellung von Nanopartikeln und nanoskopischen Strukturen nach Anspruch 1 oder 2, **dadurch gekennzeichnet, dass** als Blockcopolymer Polystyrenblockpoly(4-vinylpyridin) [PS-b-P4VP] eingesetzt wird.

4. Verfahren zur Herstellung von Nanopartikeln und nanoskopischen Strukturen nach einem der Ansprüche 1 bis 3, **dadurch gekennzeichnet, dass** als niedermolekulare Komponente 3-n-Pentadecylphenol [PDP] (11) eingesetzt wird.

5. Verfahren zur Herstellung von Nanopartikeln und nanoskopischen Strukturen nach einem der Ansprüche 1 bis 4, **dadurch gekennzeichnet, dass** als Nachbehandlung zur Verbesserung der Orientierung der Strukturen nach Verfahrensschritt c) eine Scherbeanspruchung, Extrusion oder ein Schmelzspinnen angewandt wird oder dass die Orientierung durch selektive Wechselwirkung einer oder mehrerer Komponenten des Polymerkomplexes mit einer festen, flüssigen oder gasförmigen Oberfläche stattfindet.

6. Verfahren zur Herstellung von Nanopartikeln und nanoskopischen Strukturen nach einem der Ansprüche 1 bis 5, **dadurch gekennzeichnet, dass** als Nanopartikel Zylinder, Scheiben, Blätter, Ellipsoide oder unregelmäßig geformte Partikel entstehen.

7. Verfahren zur Herstellung von Nanopartikeln und nanoskopischen Strukturen nach einem der Ansprüche 1 bis 6, **dadurch gekennzeichnet, dass** als nanoskopische Strukturen nanoskopische Löcher in der Struktur entstehen, wobei die nanoskopischen Strukturen mindestens in einer Dimension im nanoskopischen Bereich liegen.

8. Verfahren zur Herstellung von Nanopartikeln und nanoskopischen Strukturen nach einem der Ansprüche 1 bis 7, **dadurch gekennzeichnet, dass** eine Verbesserung der Metallschicht (12) der Oberfläche anschließend durch Bedampfen, Sputtem oder elektrochemische oder chemische Abscheidung erfolgt.

9. Verfahren zur Herstellung von Nanopartikeln und nanoskopischen Strukturen nach einem der Ansprüche 1 bis 8, **dadurch gekennzeichnet, dass** bei der Metallisierung eine elektrisch leitfähige Schicht entsteht.

10. Verfahren zur Herstellung von Nanopartikeln und nanoskopischen Strukturen nach einem der Ansprüche 1 bis 9, **dadurch gekennzeichnet, dass** eine Metallisierung der Oberfläche mit Palladium, Nickel, Kobalt, Kadmiumselenid, Silber oder Gold vorgenommen wird, wobei weitere Metalle, Halbmetalle oder Legierungen derselben möglich sind.

## Claims

1. A method of manufacturing nanoparticles and nanoscopic structures comprising the steps
a) mixing of a block copolymer with at least one low-molecular component and
b) a phase separation of the mixture to produce a nanostructure,
c) secondary treatment to improve the macroscopic orientation of the resulting nanostructure,
d) dissolution of at least the low-molecular components, so that nanoscopic holes or nano-particles measuring from one to two hundred nm result,
**characterised in that**
functionalisation of the surface takes place through metallization, wherein
- metal clusters, metallic nanoparticles or a continuous metal layer (12) are disposed on the surface and
- surface metallization through an adsorption of metal ions from a salt solution, in conjunction with subsequent chemical reduction, into a pure metal layer (12), metal clusters or metal nanoparticles is undertaken.

2. The method of manufacturing nanoparticles and nano-scopic structures according to claim 1, **characterised in that** further polymers, such as polystyrene (9), polyvinylpyridine (10) or poly(-paramethylstyrene) are added to the mixture according to process step a).

3. The method of manufacturing nanoparticles and nanoscopic structures according to claim 1 or 2, **characterised in that** polystyrene-block-poly(4-vinylpyridine) [PS-b-P4VP] is used as the block copolymer.

4. The method of manufacturing nanoparticles and nanoscopic structures according to one of the claims 1 to 3, **characterised in that** 3-n-pentadecylphenol [PDP] (11) is used as the low-molecular component.

5. The method of manufacturing nanoparticles and nano-scopic structures according to one of the claims 1 to 4, **characterised in that** shear stress, extrusion or melt spinning is used as an after-treatment to improve the orientation of the structures according to process step c) or that orientation takes place through the selective interaction of one or more components of the polymer complex with a solid, liquid or gaseous surface.

6. The method of manufacturing nanoparticles and nano-scopic structures according to one of the claims 1 to 5, **characterised in that** cylinders, discs, leaves, ellipsoids or irregular-shaped particles are produced as nanoparticles.

7. The method of manufacturing nanoparticles and nano-scopic structures according to one of the claims 1 to 6, **characterised in that** nanoscopic holes occur in the structure as nanoscopic structures, wherein the nanoscopic structures lie in the nanoscopic range, at least in one dimension.

8. The method of manufacturing nanoparticles and nano-scopic structures according to one of the claims 1 to 7, **characterised in that** an improvement in the metal layer (12) of the surface takes place subsequently through vaporisation, sputtering or electrochemical or chemical separation.

9. The method of manufacturing nanoparticles and nano-scopic structures according to one of the claims 1 to 8, **characterised in that** an electrically conductive layer is produced during metallization.

10. The method of manufacturing nanoparticles and nano-scopic structures according to one of the claims 1 to 9, **characterised in that** the surface is metallized with palladium, nickel, cobalt, cadmium selenide, silver or gold, wherein other metals, metalloids or alloys of the same are possible.

## Revendications

1. Procédé de fabrication de nanoparticules et de structures nanoscopiques, comprenant les étapes suivantes :
a) mélanger un copolymère bloc avec au moins un composant de faible masse moléculaire, et
b) séparer les phases du mélange pour produire une nanostructure,
c) soumettre la nanostructure ainsi créée à un traitement ultérieur pour améliorer son orientation macroscopique,
d) enlever par dissolution au moins ledit composant de faible masse moléculaire pour ainsi créer soit des cavités nanoscopiques soit des nanoparticules d'une taille comprise entre un et deux cent nm,
**caractérisé en ce que**
la surface est rendue fonctionnelle par métallisation,
- les agrégats métalliques, les nanoparticules métalliques ou une couche métallique continue (12) étant disposés sur ladite surface, et
- ladite métallisation de la surface étant réalisée par adsorption d'ions métalliques issus d'une solution de sel, lesdits ions subissant ensuite une réduction chimique pour former une couche métallique continue (12), des agrégats métalliques ou des nanoparticules métalliques.

2. Procédé de fabrication de nanoparticules et de structures nanoscopiques selon la revendication 1, **caractérisé en ce que** d'autres polymères tels que le polystyrène (9), le polyvinylpyridine (10) ou le poly-para-méthylstyrène sont ajoutés au mélange selon l'étape a).

3. Procédé de fabrication de nanoparticules et de structures nanoscopiques selon les revendications 1 ou 2, **caractérisé en ce que** le polystyrène à blocs de poly(4-vinylpyridine) [PS-b-P4VP] est utilisé en tant que copolymère bloc.

4. Procédé de fabrication de nanoparticules et de structures nanoscopiques selon une des revendications 1 à 3, **caractérisé en ce que** le 3-n-pentadecylphénol [PDP] (11) est utilisé en tant que composant de faible masse moléculaire.

5. Procédé de fabrication de nanoparticules et de structures nanoscopiques selon une des revendications 1 à 4, **caractérisé en ce que** le traitement ultérieur pour améliorer l'orientation des structures selon l'étape c) consiste à soumettre lesdites structures à une contrainte de cisaillement ou à un procédé d'extrusion ou de filature au fondu, ou que l'orientation est effectuée par interaction sélective d'un ou de plusieurs composants du complexe de polymères avec une surface solide, liquide ou gazeuse.

6. Procédé de fabrication de nanoparticules et de structures nanoscopiques selon une des revendications 1 à 5, **caractérisé en ce que** les nanoparticules créées se présentent sous forme de disques, de feuilles, d'ellipsoïdes ou qu'elles sont de forme irrégulière.

7. Procédé de fabrication de nanoparticules et de structures nanoscopiques selon une des revendications 1 à 6, **caractérisé en ce que** les structures nanoscopiques créées se présentent sous forme de cavités au sein de la structure, les structures nanoscopiques étant au moins dans une dimension de taille nanoscopique.

8. Procédé de fabrication de nanoparticules et de structures nanoscopiques selon une des revendications 1 à 7, **caractérisé en ce que** l'amélioration ultérieure de la couche métallique (12) de la surface est réalisée par dépôt en phase vapeur, par pulvérisation cathodique, par électrodéposition ou par dépôt chimique.

9. Procédé de fabrication de nanoparticules et de structures nanoscopiques selon une des revendications 1 à 8, **caractérisé en ce qu'**une couche électriquement conductrice est créée par la métallisation.

10. Procédé de fabrication de nanoparticules et de structures nanoscopiques selon une des revendications 1 à 9, **caractérisé en ce qu'**une métallisation de la surface est réalisée avec du palladium, du nickel, du cobalt, du séléniure de cadmium, de l'argent ou de l'or, d'autres métaux, semi-métaux ou leurs alliages pouvant être mis en oeuvre.
